# EUROPÄISCHE PATENTSCHRIFT

(11) **EP 3 353 000 B1**
(45) Veröffentlichungstag und Bekanntmachung des Hinweises auf die Patenterteilung: **07.10.2020**
(21) Anmeldenummer: 16741861.5
(22) Anmeldetag: 20.07.2016
(51) Int. Cl.: B60H 1/00, F16B 2/20, F24F 13/20

(54) **GEHÄUSEVERBINDUNGSVORRICHTUNG ZUM VERBINDEN VON GEHÄUSESEKTIONEN ODER GEHÄUSEMODULEN VON LÜFTUNGS- ODER KLIMAANLAGEN**
HOUSING CONNECTING DEVICE FOR CONNECTING HOUSING SECTIONS OR HOUSING MODULES OF VENTILATION OR AIR-CONDITIONING SYSTEMS
DISPOSITIF DE LIAISON DE BOÎTIER POUR RELIER DES SECTIONS DE BOÎTIER OU DES MODULES DE BOÎTIER DE SYSTÈMES DE VENTILATION OU DE CLIMATISATION

(30) Priorität: 24.09.2015 DE 102015012407
(43) Veröffentlichungstag der Anmeldung: 01.08.2018
(73) Patentinhaber: Systemair AB, 73930 Skinnskatteberg (SE)
(72) Erfinder: BERGMAN, Johnny, 73743 Fagersta (SE); SORVOJA, Raine, 73743 Fagersta (SE); OYSTEIN, Amdal, 2070 Rahold (NO); SALO, Daniel, 2019 Skedsmokorset (NO); YILMAZ, Orkun, 34173 Merter (TR); BERGER, Ralph, 45968 Gladbeck (DE); SONNEK, Rafael, 40625 Düsseldorf (DE); STONCIUS, Tomas, 20105 Ukmerge (LT); SONDERGAARD HANSEN, Thomas, 8310 Tranbjerg (DK); BANG, Ulf, 8700 Horsens (DK); BIJMANS, Andy, 5235 TG 's-Hertgenbosch (NL); KIEVITS, Peter, 5165 EK Waspik (NL)
(74) Vertreter: Cohausz Hannig Borkowski Wißgott
(86) Internationale Anmeldenummer: PCT/EP2016/001268
(87) Internationale Veröffentlichungsnummer: WO 2017/050405

(56) Entgegenhaltungen:
- DE-A1- 2 908 104
- DE-A1- 3 221 676
- GB-A- 1 430 423

## Beschreibung

Die Erfindung betrifft eine Gehäuseverbindungsvorrichtung zum Verbinden zweier Gehäusesektionen oder Gehäusemodule einer Lüftungs- oder Klimaanlage aneinander.

Beim Zusammenstellen und Montieren einer Lüftungs- oder Klimaanlage mit einzelnen Gehäusesektionen oder Gehäusemodulen ist es oft schwierig, die quaderförmigen Gehäusesektionen oder Gehäusemodule aneinander zu befestigen, da deren Rückseiten oft nicht zugänglich sind, um die Teile aneinander zu schrauben. Die Zugänglichkeit ist oft weder von außen noch von innen gegeben.

Aus der DE 29 08 104 A1 ist eine Klimaanlage eines Kraftfahrzeugs bekannt mit einem Gehäuseoberteil und einem Gehäuseunterteil, die über Schnellverschlüsse miteinander verbunden sind, die konstruktiv aufwändig sind.

Aufgabe der Erfindung ist es, ein konstruktiv einfaches und leicht handhabbares Verbindungssystem zu schaffen, durch das quaderförmige Gehäusesektionen oder Gehäusemodule einer Lüftungs- oder Klimaanlage einfach und sicher ohne Werkzeuge aneinander befestigbar sind und dies auch in unzugänglichen Situationen. Auch soll die Formgebung der Gehäuseverbindungsvorrichtung in Kombination mit dem Einsatz von mindestens je zwei Verbindern auf der Bedien- und Rückseite der Geräte eine "Selbstausrichtung" der Sektionen in allen Raumachsen X, Y, Z erlauben, so dass eine genaue Führung und ein sicherer Halt erreicht werden.

Diese Aufgabe wird erfindungsgemäß gelöst,
- durch mindestens jeweils zwei an der Bedien- und Rückseite einer ersten Gehäusesektion oder eines ersten Gehäusemoduls befestigte erste Verbindungselemente mit jeweils mindestens einer Sperrklinke,
- durch mindestens jeweils zwei an der Bedien- und Rückseite einer benachbarten zweiten Gehäusesektion oder eines benachbarten zweiten Gehäusemoduls befestigte zweite Verbindungselemente mit jeweils zwei Rastzähnen für eine Vorrast und eine Endrast der Sperrklinke,
- wobei die Anbringung der Verbindungselemenet wahlweise auf der Außenseite oder Innenseite der Gehäusesektionen oder Gehäusemodule erfolgen kann,
- wobei ein Verbindungselement einen Vorsprung und zwei Ausnehmungen und das andere Verbindungselement zwei Vorsprünge und eine Ausnehmung für eine formschlüssige Verbindung aufweist.

Hierzu wird vorzugsweise vorgeschlagen, dass beim Einrasten der Sperrklinke in die Vorrast die beiden Verbindungselemente zwischen sich einen Abstand bilden und beim Einrasten in die Endrast die beiden Verbindungselemente aneinander liegen.

Durch diese erfindungsgemäße Konstruktion wird es ermöglicht, die Gehäusesektionen oder Gehäusemodule einer Lüftungs- oder Klimaanlage in einer ersten ausgerichteten Vorposition in grober Ausrichtung aneinander in einer ersten Raststufe zu befestigen, um dann durch ein erneutes Aneinanderdrücken von Hand oder mit Hilfsmitteln die vollständige endgültige Verbindung in exakter Ausrichtung in der zweiten Raststufe zu erhalten. Diese erfindungsgemäßen Bauteileverbinder ermöglichen somit bei einfacher Handhabung und ohne Werkzeuge eine erste Vorposition zu erreichen und danach die exakte feste endgültige Befestigungsposition zu erhalten. Hierbei sind die beiden Befestigungselemente der Bauteile-Verbindungsvorrichtung von einfacher und robuster Konstruktion und damit leicht herzustellen und einfach zu handhaben.

Während die Gehäusemodule oder Gehäusesektionen noch rundum zugänglich sind, können die Verbindungselemente an die Seitenwände leicht angeschraubt werden. Danach brauchen die Module oder Sektionen nur noch in die Vorposition gedrückt zu werden, um dann endgültig aneinander gedrückt zu werden.

Ein konstruktiv sicherer und fester Halt ist dann gegeben, wenn das erste Verbindungselement als Sperrklinke eine Federzunge aufweist, deren freies Ende eine Rastnase bildet. Hierbei kann die Federzunge von einem Federblech gebildet sein.

Um eine genaue Führung und einen sicheren Halt der Verbindungselemente aneinander zu erhalten, wird vorgeschlagen, dass zumindest eines der beiden Verbindungselemente mindestens einen vorspringenden Bereich aufweist, der in die Bewegungsrichtung der beiden Verbindungselemente zueinander vorstehend ausgerichtet ist und nach der Befestigung der beiden Verbindungselemente aneinander formschlüssig in einer Ausnehmung des anderen Verbindungselementes einliegt.

Auch ist von Vorteil, wenn die Verbindungselemente aus Kunststoff oder Metall bestehen. Hierbei können die Verbindungselemente Bohrungen aufweisen für Schrauben zur Befestigung an den Seitenwänden der Gehäusesektionen oder Gehäusemodule.

Besonders vorteilhaft ist es, dass die vorspringenden Bereiche und Ausnehmungen durch ihre Formgebung, beim Zusammenschieben oder Zusammenziehen der Gerätemodule oder Sektionen diese in allen drei Raumachsen gegeneinander ausrichten. Auch ist von Vorteil, dass sich die Verbindungselemente und damit die Gehäusesektionen oder Gehäusemodule in Kombination mit der Sperrklinke werkzeuglos miteinander verbinden lassen.

Ferner wird vorgeschlagen, dass die Lösbarkeit bzw. Trennbarkeit der Gehäuseverbindungsvorrichtungen und damit der Gehäusemodule oder Sektionen durch Entfernen der Sperrklinken wahlweise auf der Bedien- oder Rückseite gewährleistet ist.

Da eine der Seiten stets zugänglich ist und die Sperrklinken nur mittels lösbarer Schraubverbindung angebracht sind, gestaltet sich deren Demontage sehr einfach.

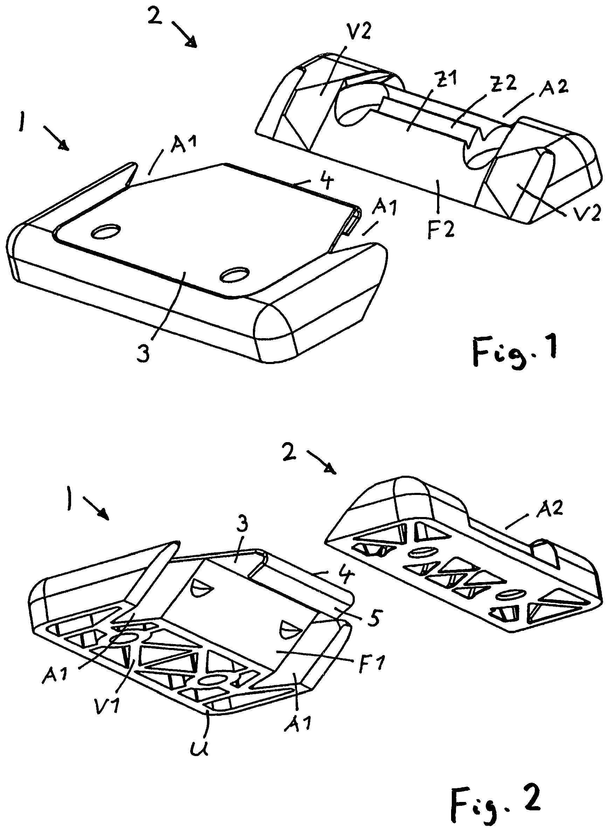

Ein Ausführungsbeispiel der Erfindung ist in den Zeichnungen dargestellt und wird im Folgenden näher beschrieben. Es zeigen
- Fig. 1: eine erste perspektivische Darstellung der beiden Verbindungselemente im noch nicht zusammengesetzten Zustand,
- Fig. 2: eine zweite perspektivische Darstellung der beiden Verbindungselemente im noch nicht zusammengesetzten Zustand,

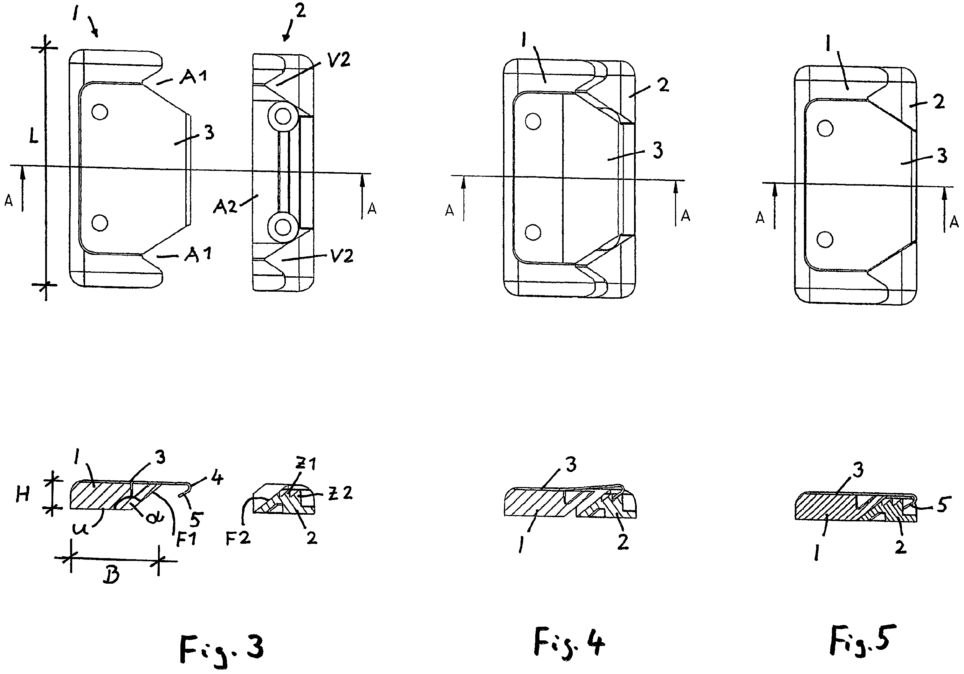

- Fig. 3: die beiden Verbindungselemente in Draufsicht und Schnitt im noch nicht zusammengesetzten Zustand,
- Fig. 4: die Verbindungselemente nach Fig. 3 in der ersten Raststufe,
- Fig. 5: die Verbindungselemente nach Fig. 3 und 4 in der zweiten Raststufe.

Die Vorrichtung ist ein zweiteiliger Bauteilverbinder zum Verbinden von Gehäusen von Modulen oder Sektionen von Lüftungs- oder Klimaanlagen. Hierbei hat jede Sektion oder jedes Modul ein eigenes quaderförmiges Außengehäuse, das mit äußeren Profilrahmen und Seitenwänden insbesondere Paneelen Luft führende Geräte umgibt. Um die Gehäusesektionen und/oder Gehäusemodule miteinander zu verbinden, damit danach die gesamte Anlage entstanden ist, werden an den insbesondere senkrechten Seitenwänden der Sektionen oder Module Verbindungselemente 1, 2 in gleicher Höhe angeschraubt, die nach dem Zusammenschieben der Sektionen/Module ineinander greifen, um damit einen festen Halt zweier Sektionen/Module aneinander zu schaffen. Hierbei sind die Verbindungselemente 1, 2 auf den Außenflächen oder Innenflächen der Sektionen/Module befestigt, so dass die Stirnseiten der Sektionen/Module eng und ohne Zwischenräume/Spalte aneinander befestigt werden können.

Die zwei massiven Verbindungselemente 1, 2 aus Vollmaterial (Kunststoff oder Metall) sind so gestaltet, dass sie formschlüssig ineinander passen. Das erste Verbindungselement 1 hat die Form eines länglichen quaderförmigen Blockes mit einer größeren Breite B als Höhe H und einer größeren Länge L als Breite B, wobei eine über die Länge L angeordnete Seitenfläche als Anlagefläche F1 für das zweite Verbindungselement 2 dient und schräg angeordnet ist, so dass die Anlagefläche F1 einen Innenwinkel α von 120 bis 150 Grad vorzugsweise von 140 Grad mit der Unterfläche U bildet.

Die Anlagefläche F1 bildet einen mittleren vorspringenden Bereich V1 zwischen zwei seitlichen Ausnehmungen A1. Auf der Oberseite des Verbindungselementes 1 liegt durch Schrauben 6 oder Nieten befestigt eine Sperrklinke 3 in Form einer Federzunge aus Federblech an, die an ihrer den Block an der Längsseite überragenden Längskante 4 eine zur Anlagefläche F1 parallele Rastnase 5 bildet. Die die Sperrklinke durchdringenden Schrauben 6 dienen gleichzeitig der Befestigung des Verbindungselements 1 am Gehäuse der Sektion oder des Moduls.

Das zweite Verbindungselement 2 weist die gleiche Höhe H und die gleiche Länge L wie das erste Verbindungselement 1 auf und besitzt eine geringere Breite als die Breite B des ersten Verbindungselements 1. Die Anlagefläche F2 des zweiten Verbindungselements 2 besitzt denselben Schrägwinkel wie der Winkel α des ersten Verbindungselements 1, so dass nach dem endgültigen Zusammenschieben der Sektionen oder Module die schrägen Anlageflächen F1 und F2 aneinander liegen. Hierbei bildet die Anlagefläche F2 zwei V-förmige nasenförmige Vorsprünge V2, die in Form und Größe den V-förmigen Ausnehmungen A1 entsprechen. Ferner bildet die Anlagefläche F2 eine mittlere Ausnehmung A2, die in Form und Größe dem vorspringenden Bereich V1 entspricht, so dass die zwei Anlageflächen F1 und F2 formschlüssig ineinanderpassen. Dabei haben die seitlichen Schrägflächen der Ausnehmungen A1, A2 und der Vorsprünge V1 und V2 zentrierende Führungsaufgaben, wenn zwei Gehäusesektionen oder Gehäusemodule aneinander geschoben werden.

Die Oberseite des zweiten Verbindungselements 2 bildet zwei Rastzähne Z1, Z2, deren Zahnspitzen parallel zur Längsausrichtung des zweiten Verbindungselements 2 und parallel zur Rastnase 5 der Sperrklinke 3 verlaufen. Beim Zusammenschieben der Sektionen oder Module und damit der Verbindungselemente 1, 2 zueinander rastet in der Vorrast die Sperrklinke 3 mit ihrer Rastnase 5 hinter den ersten Rastzahn Z1 ein. Werden dann die Sektionen oder Module in ihre endgültige Stellung geschoben, so rastet die Rastnase 5 hinter den zweiten Rastzahn ein. Damit ist auf einfache Weise ohne Werkzeuge eine sichere Befestigung der Gehäusesektionen oder Gehäusemodule aneinander erreicht.

Die Lösbarkeit dieser Verbindung ist durch das einseitige Entfernen der Sperrklinken möglich. Hiernach lassen sich die Gehäusesektionen oder Gehäusemodule wieder auseinanderziehen bzw. schieben.

An den senkrechten, aneinander zu befestigenden Seitenwänden zweier Gehäusesektionen oder Gehäusemodule ist stets nicht nur eine Verbindungsvorrichtung mit zwei Verbindungselementen 1, 2 befestigt, sondern in der Regel zwei bis vier Verbindungselemente 1, 2 (Verbindungselementenpaare), so dass ein sicherer Halt gegeben ist.

Die vorspringenden Bereiche V1, V2 und Ausnehmungen A1, A2 richten durch ihre Formgebung, beim Zusammenschieben oder Zusammenziehen der Gerätemodule oder Sektionen diese, in Höhenrichtung, gegeneinander aus. Durch die Formgebung der Anlageflächen F1, F2 und der Anordnung von je mindestens zwei Gehäuseverbindungsvorrichtungen auf der Bedien- und Rückseite der Gehäusemodule oder Sektionen erfolgt weiterhin eine Ausrichtung der Gerätemodule oder Sektionen in Tiefenrichtung. Durch Anordnung von je mindestens zwei Gehäuseverbindungsvorrichtungen auf der Bedien- und Rückseite erfolgt in der Vorrast- und Endraststellung weiterhin eine Ausrichtung der Gerätemodule oder Sektionen in Längsrichtung. Zusammengefasst erfolgt bei Einsatz der Gehäuseverbindungsvorrichtungen eine Ausrichtung der Gerätemodule oder Sektionen in allen drei Raumachsen X, Y, Z.

Die Gehäusesektionen oder Gehäusemodule lassen sich in Kombination mit der Sperrklinke 3 werkzeuglos miteinander verbinden. Eine weitere Verbindung der Verbindungselemente 1, 2 untereinander besteht nicht. Auch ist die Lösbarkeit bzw. Trennbarkeit der Gehäuseverbindungsvorrichtungen und damit der Gehäusemodule oder Sektionen durch Entfernen der Sperrklinken auf der Bedien- oder Rückseite gewährleistet.

## Patentansprüche

1. Gehäuseverbindungsvorrichtung zum Verbinden zweier Gehäusesektionen oder Gehäusemodule einer Lüftungs- oder Klimaanlage aneinander, wobei
- mindestens jeweils zwei an der Bedien- und Rückseite einer ersten Gehäusesektion oder eines ersten Gehäusemoduls befestigbare erste Verbindungselemente (1) mit jeweils mindestens einer Sperrklinke (3),
- und mindestens jeweils zwei an der Bedien- und Rückseite einer benachbarten zweiten Gehäusesektion oder eines benachbarten zweiten Gehäusemoduls befestigbare zweite Verbindungselemente (2) mit jeweils einem Rastzahn oder zwei Rastzähnen für eine Vorrast und eine Endrast der Sperrklinke vorgesehen sind.
- wobei die Verbindungselemente wahlweise auf der Außenseite oder Innenseite der Gehäusesektionen oder der Gehäusemodule anbringbar sind, **dadurch gekennzeichnet, dass**
- ein Verbindungselement (1) einen Vorsprung (V1) und zwei Ausnehmungen (A1) und das andere Verbindungselement (2) zwei Vorsprünge (V2) und eine Ausnehmung (A2) für eine formschlüssige Verbindung aufweist.

2. Vorrichtung nach Anspruch 1, **dadurch gekennzeichnet, dass** beim Einrasten der Sperrklinke (3) in die Vorrast die beiden Verbindungselemente (1, 2) zwischen sich einen Abstand bilden und beim Einrasten in die Endrast die beiden Verbindungselemente aneinander liegen.

3. Vorrichtung nach Anspruch 1 oder 2, **dadurch gekennzichnet**, dass das erste Verbindungselement (1) als Sperrklinke (3) eine Federzunge aufweist, deren freies Ende eine Rastnase (5) bildet.

4. Vorrichtung nach Anspruch 3, **dadurch gekennzeichnet, dass** die Federzunge von einem Federblech gebildet ist.

5. Vorrichtung nach einem der vorherigen Ansprüche, **dadurch gekennzeichnet, dass** die Verbindungselemente (1, 2) aus Kunststoff oder Metall bestehen.

6. Vorrichtung nach einem der vorherigen Ansprüche, **dadurch gekennzeichnet, dass** die Verbindungselemente (1, 2) Bohrungen aufweisen für Schrauben zur Befestigung an den Seitenwänden der Gehäusesektionen oder Gehäusemodule.

7. Vorrichtung nach einem der vorherigen Ansprüche, **dadurch gekennzeichnet, dass** die vorspringenden Bereiche (V1, V2) und Ausnehmungen (A1, A2) durch ihre Formgebung, beim Zusammenschieben oder Zusammenziehen der Gerätemodule oder Sektionen diese in allen drei Raumachsen gegeneinander ausrichten.

8. Vorrichtung nach einem der vorherigen Ansprüche, **dadurch gekennzeichnet, dass** sich die Verbindungselemente (1, 2) und damit die Gehäusesektionen oder Gehäusemodule in Kombination mit der Sperrklinke (3) werkzeuglos miteinander verbinden lassen.

9. Vorrichtung nach einem der vorherigen Ansprüche, **dadurch gekennzeichnet, dass** die Lösbarkeit bzw. Trennbarkeit der Gehäuseverbindungsvorrichtungen und damit der Gehäusemodule oder Sektionen durch Entfernen der Sperrklinken auf der Bedien- oder Rückseite gewährleistet ist.

## Claims

1. Housing connecting device for connecting two housing sections or housing modules of a ventilation or air-conditioning system to each other, wherein there is provided
- at least in each case two first connecting elements (1) which can be fastened to the operating side and rear side of a first housing section or of a first housing module and each have at least one detent (3), and
- at least in each case two second connecting elements (2) which can be fastened to the operating side and rear side of an adjacent second housing section or of an adjacent second housing module and each have a latching tooth or two latching teeth for a preliminary latching position and a final latching position of the detent,
- wherein the connecting elements can be attached either on the outer side or inner side of the housing sections or housing modules, **characterized in that**
- one connecting element (1) has one projection (V1) and two recesses (A1) and the other connecting element (2) has two projections (V2) and one recess (A2) for an interlocking connection.

2. Device according to Claim 1, **characterized in that**, when the detent (3) latches into the preliminary latching position, the two connecting elements (1, 2) form a spacing between each other and, when same latches into the final latching position, the two connecting elements bear against each other.

3. Device according to Claim 1 or 2, **characterized in that** the first connecting element (1) has, as detent (3), a spring tongue, the free end of which forms a latching lug (5).

4. Device according to Claim 3, **characterized in that** the spring tongue is formed by a spring plate.

5. Device according to one of the preceding claims, **characterized in that** the connecting elements (1, 2) are composed of plastic or metal.

6. Device according to one of the preceding claims, **characterized in that** the connecting elements (1, 2) have bores for screws for fastening to the side walls of the housing sections or housing modules.

7. Device according to one of the preceding claims, **characterized in that** the shaping of the projecting regions (V1, V2) and of the recesses (A1, A2) enables the appliance modules or sections to be aligned in all three spatial axes in relation to each other when said appliance modules or sections are pushed together or are drawn together.

8. Device according to one of the preceding claims, **characterized in that** the connecting elements (1, 2) and therefore the housing sections or housing modules can be connected to each other in combination with the detent (3) without a tool.

9. Device according to one of the preceding claims, **characterized in that** the releasability or separability of the housing connecting devices and therefore of the housing modules or sections is ensured by removing the detents on the operating side or rear side.

## Revendications

1. Dispositif d'assemblage de boîtier destiné à assembler deux sections de boîtier ou modules de boîtier d'un équipement de ventilation ou de climatisation l'une contre l'autre,
deux premiers éléments d'assemblage (1) pouvant respectivement être fixés au côté de commande et arrière d'une première section de boîtier ou d'un premier module de boîtier et comprenant respectivement au moins un cliquet de blocage (3) et deux deuxièmes éléments d'assemblage (2) pouvant respectivement être fixés au côté de commande et arrière d'une deuxième section de boîtier voisine ou d'un deuxième module de boîtier voisin et comprenant respectivement une dent d'encliquetage ou deux dents d'encliquetage pour un pré-cran d'arrêt et un cran d'arrêt final du cliquet de blocage étant présents,
- les éléments d'assemblage pouvant, au choix, être montés sur le côté extérieur ou le côté intérieur des sections de boîtier ou des modules de boîtier, **caractérisé en ce que**
- un élément d'assemblage (1) possède une partie saillante (V1) et deux cavités (A1) et l'autre élément d'assemblage (2) possède deux parties saillantes (V2) et une cavité (A2) pour un assemblage par complémentarité de formes.

2. Dispositif selon la revendication 1, **caractérisé en ce que** lors de l'encliquetage du cliquet de blocage (3) dans le pré-cran d'arrêt, les deux éléments d'assemblage (1, 2) forment un écart entre eux et, lors de l'encliquetage dans le cran d'arrêt final, les deux éléments d'assemblage reposent l'un contre l'autre.

3. Dispositif selon la revendication 1 ou 2, **caractérisé en ce que** le premier élément d'assemblage (1) possède en tant que cliquet de blocage (3) une languette flexible dont l'extrémité libre forme un tenon d'encliquetage (5).

4. Dispositif selon la revendication 3, **caractérisé en ce que** la languette flexible est formée par une tôle à ressort.

5. Dispositif selon l'une des revendications précédentes, **caractérisé en ce que** les éléments d'assemblage (1, 2) se composent de matière plastique ou de métal.

6. Dispositif selon l'une des revendications précédentes, **caractérisé en ce que** les éléments d'assemblage (1, 2) possèdent des perçages pour des vis servant à la fixation aux parois latérales des sections de boîtier ou des modules de boîtier.

7. Dispositif selon l'une des revendications précédentes, **caractérisé en ce que** les zones saillantes (V1, V2) et les cavités (A1, A2), du fait de leur façonnage, lors de l'emboîtement ou du serrage des modules d'appareil ou des sections, alignent ceux-ci les uns par rapport aux autres dans la totalité des trois axes spatiaux.

8. Dispositif selon l'une des revendications précédentes, **caractérisé en ce que** les éléments d'assemblage (1, 2), et ainsi les sections d'appareil ou les modules d'appareil, en combinaison avec le cliquet de blocage (3) peuvent être assemblés entre eux sans outil.

9. Dispositif selon l'une des revendications précédentes, **caractérisé en ce que** la possibilité de détacher ou la possibilité de séparer les dispositifs d'assemblage de boîtier, et ainsi les modules d'appareil ou les sections est garantie par l'enlèvement des cliquets de blocage sur le côté de commande ou arrière.
